# EUROPÄISCHE PATENTSCHRIFT

(11) **EP 3 323 180 B1**
(45) Veröffentlichungstag und Bekanntmachung des Hinweises auf die Patenterteilung: **16.12.2020**
(21) Anmeldenummer: 15766431.9
(22) Anmeldetag: 11.09.2015
(51) Int. Cl.: H02B 13/045, H02G 5/06, H02B 13/00

(54) **GASISOLIERTES ELEKTRISCHES MODUL**
GASINSULATED ELECTRICAL MODULE
MODULE ÉLECTRIQUE À ISOLATION GAZEUSE

(43) Veröffentlichungstag der Anmeldung: 23.05.2018
(73) Patentinhaber: Siemens Aktiengesellschaft, 80333 München (DE)
(72) Erfinder: HOLZAPFEL, Johann, 2134 Staatz-Kautendorf (AT); WALLNER, Christian, 91058 Erlangen (DE)
(86) Internationale Anmeldenummer: PCT/EP2015/070815
(87) Internationale Veröffentlichungsnummer: WO 2017/041851

(56) Entgegenhaltungen:
- EP-A1- 0 717 484
- EP-A1- 0 999 623
- WO-A1-91/00633
- WO-A1-2014/198581
- FR-A1- 2 125 198

## Beschreibung

Gasisolierte elektrische Baugruppe mit gasisolierten elektrischen Module.

Die Erfindung bezieht sich auf eine gasisolierte elektrische Baugruppe mit zumindest einem ersten Modul und mindestens einem zweiten Modul, das mit dem ersten Modul mechanisch verbunden ist.

Derartige gasisolierte elektrische Module sind beispielsweise in der deutschen Patentschrift DE 197 27 855 C1 beschrieben.

Aus der WO 2014/198581 A1 ist ein Isolationssystem bekannt.

Das bekannte Isolationssystem umfasst zwei miteinander verbindbare Kapselungsgehäuse, die im verbundenen Zustand einen Zwischenraum begrenzen. Der Zwischenraum kann mittels eines schaltbaren Fluidkanals mit einem Innenraum eines der Kapselungsgehäuse verbunden werden.

Ein weiteres artgemäßes Isolationssystem ist aus der EP 0 717 484 A1 bekannt.

Der Erfindung liegt die Aufgabe zugrunde, eine gasisolierte elektrische Baugruppe mit einem gasisolierten elektrischen Modul anzugeben, das sich besonders aufwandsarm mit anderen, vergleichbaren Modulen elektrisch verbinden lässt.

Diese Aufgabe wird erfindungsgemäß durch eine gasisolierte elektrische Baugruppe mit den Merkmalen gemäß Patentanspruch 1 gelöst. Vorteilhafte Ausgestaltungen des erfindungsgemäßen Moduls sind in Unteransprüchen angegeben.

Danach ist erfindungsgemäß vorgesehen, dass das Modul ein moduleigenes, das Gehäuse an einer Gehäuseöffnung verschließen des Verschlusselement aufweist, das ein Isolatorelement umfasst, das Isolatorelement ein Durchgangsloch aufweist, in das der Innenleiter hineinragt oder durch das der Innenleiter nach außen heraus in einen außerhalb des Gehäuses befindlichen und an das Isolatorelement angrenzenden Schnittstellen-bereich, der zum Anschluss eines weiteren gasisolierten elektrischen Moduls geeignet ist, hineinragt, und das Verschlusselement ein von außen steuerbares Gasleitelement aufweist, das in einem geöffneten Zustand einen Gasfluss zwischen dem Innenraum des Gehäuses und dem Schnittstellenbereich ermöglicht und in einem geschlossenen Zustand das Verschlusselement gasdicht verschließt.

Ein wesentlicher Vorteil des erfindungsgemäßen Moduls ist darin zu sehen, dass das Gasleitelement eine Gasstromverbindung zwischen dem Innenraum des Gehäuses und dem Schnittstellenbereich des Moduls ermöglicht, so dass ein nach dem Verbinden des Moduls mit einem anderen vergleichbaren Modul im Schnittstellenbereich gebildeter Zwischenabschnitt in einfacher Weise allein dadurch mit Isoliergas gefüllt werden kann, dass das Gasleitelement in seinen geöffneten Zustand gebracht wird. Mit anderen Worten ermöglicht es das erfindungsgemäße Modul, den nach dem Verbinden des Moduls mit einem anderen Modul zunächst mit Umgebungsluft gefüllten Zwischenabschnitt dadurch mit Isoliergas zu füllen, dass der Zwischenabschnitt mit dem Isoliergas des Moduls geflutet wird. Auf externe Isoliergasquellen zum Füllen des Zwischenabschnitts kann somit im Baustellen- bzw. Montagebereich verzichtet werden.

Bezüglich der Ausgestaltung des Gasleitventils so ist dieses ein Ventil mit zumindest zwei Anschlüssen, von denen ein erster Anschluss mit dem Innenraum des Gehäuses in Verbindung steht und ein zweiter Anschluss mit dem Schnittstellenbereich in Verbindung steht, und das Ventil in einer ersten Ventilstellung den ersten Anschluss verschließt und in einer zweiten Stellung den ersten und den zweiten Anschluss miteinander gasstrommäßig verbindet.

Erfindungsgemäß weist das steuerbare Gasleitelement zumindest drei Anschlüsse auf, von denen ein erster Anschluss mit dem Innenraum des Gehäuses in Verbindung steht, ein zweiter Anschluss mit dem Schnittstellenbereich in Verbindung steht und ein dritter Anschluss mit einem Außenbereich außerhalb des Moduls in Verbindung steht und eine Gasstromverbindung mit einer externen, außerhalb des Moduls befindlichen Gas- oder Vakuumquelle ermöglicht.

Erfindungsgemäss ist das steuerbare Gasleitelement ein Wegeventil, das in einer ersten Ventilstellung zumindest den ersten Anschluss verschließt, in einer zweiten Stellung den ersten und den zweiten Anschluss miteinander gasstrommäßig verbindet und den dritten Anschluss verschließt und in einer dritten Ventilstellung den dritten Anschluss ausschließlich mit dem ersten Anschluss verbindet und den zweiten Anschluss verschließt.

Erfindungsgemäß handelt es sich bei dem Gasleitelement um ein Wegeventil, das in einer vierten Ventilstellung, den ersten Anschluss verschließt und den zweiten und den dritten Anschluss miteinander gasstrommäßig verbindet. Eine solche vierte Ventilstellung ermöglicht es - beispielsweise für den Fall einer gewünschten Demontage von miteinander verbundenen Modulen - in vorteilhafter Weise, den bereits erwähnten, im Schnittstellenbereich zwischen den Modulen auftretenden Zwischenabschnitt zu evakuieren bzw. darin befindliches Isoliergas umweltgerecht zu entfernen, bevor die Module voneinander getrennt werden.

Vorzugsweise bildet das steuerbare Gasleitelement einen Bestandteil eines Flanschelements, das das Gehäuse und das Isolatorelement miteinander verbindet und eine mechanische Schnittstelle bildet, die zum Anschluss eines Flanschelements des erwähnten weiteren gasisolierten elektrischen Moduls geeignet ist.

Bezüglich der elektrischen Verbindung des Moduls mit anderen Modulen wird es als vorteilhaft angesehen, wenn der Innenleiter in demjenigen Leiterabschnitt, der in das Durchgangsloch im Isolatorelement hineinragt oder durch das Durchgangsloch im Isolatorelement hindurchragt, ein Anschlusselement aufweist, das eine steckbare elektrische Verbindung mit einem dazu passenden, insbesondere komplementären, Anschlusselement eines Innenleiters des weiteren gasisolierten elektrischen Moduls ermöglicht.

Bezüglich der elektrischen Verbindung der Innenleiter wird es als vorteilhaft angesehen, wenn das Anschlusselement durch einen Steckerabschnitt, eine Kontakthülse oder einen Federkontakt gebildet ist oder zumindest einen Steckerabschnitt, eine Kontakthülse und/oder zumindest einen Federkontakt aufweist.

Das Gehäuse ist vorzugsweise ein rohrförmiges Gehäuse, das ein erstes und ein zweites Rohrende aufweist, von denen das erste Rohrende die oben erwähnte Gehäuseöffnung bildet.

Bei der letztgenannten Ausgestaltung ist es vorteilhaft, wenn das zweite Rohrende mit einem zweiten Verschlusselement gasdicht verschlossen ist, das ein zweites Isolatorelement umfasst, und das zweite Isolatorelement ein Durchgangsloch aufweist, in das der Innenleiter hineinragt oder durch den der Innenleiter in einen zweiten Schnittstellenbereich hineinragt, der zum Anschluss eines dritten gasisolierten elektrischen Moduls geeignet ist.

Bezüglich einer artgemäßen Baugruppe ist erfindungsgemäß vorgesehen, dass zumindest das erste Modul ein Modul wie oben beschrieben ist, das zweite Modul ein moduleigenes Verschlusselement aufweist, das ein Gehäuse des zweiten Moduls an einer Gehäuseöffnung verschließt und ein Isolatorelement umfasst, das Isolatorelement des zweiten Moduls ein Durchgangsloch aufweist, in das ein Innenleiter des zweiten Moduls hineinragt oder durch das der Innenleiter in Richtung auf das erste Modul herausragt, und die Verschlusselemente der zwei Module einen Zwischenabschnitt zwischen sich begrenzen.

Bezüglich der Vorteile der erfindungsgemäßen Baugruppe sei auf die obigen Ausführungen im Zusammenhang mit den Vorteilen des erfindungsgemäßen Moduls verwiesen, da die Vorteile des erfindungsgemäßen Moduls für die erfindungsgemäße Baugruppe entsprechend gelten.

Gemäß der Erfindung ist der Zwischenabschnitt zwischen dem Verschlusselement des ersten Moduls und dem Verschlusselement des zweiten Moduls im geschlossenen Zustand des von außen steuerbaren Gasleitelements des ersten Moduls vom Innenraum des ersten Moduls gasstrommäßig getrennt und der Zwischenabschnitt im geöffneten Zustand des von außen steuerbaren Gasleitelements des ersten Moduls mit dem Innenraum des ersten Moduls gasstrommäßig verbunden.

Die Erfindung bezieht sich darüber hinaus auf ein Verfahren gemäß Anspruch 2 zum Montieren einer gasisolierten elektrischen Baugruppe, wie sie oben beschrieben worden ist. Erfindungsgemäß ist bezüglich eines solchen Verfahrens vorgesehen, dass das erste Modul mit einem Isoliergas gefüllt und anschließend gasdicht verschlossen wird, wobei, insbesondere indem, das von außen steuerbare Gasleitelement des ersten Moduls in den geschlossenen Zustand gebracht wird, das zweite Modul mit einem Isoliergas gefüllt und anschließend gasdicht verschlossen wird, nach dem Einfüllen des Isoliergases in die zwei Module die zwei Module mechanisch miteinander verbunden werden, wobei zwischen den Verschlusselementen der zwei Module ein Zwischenabschnitt gebildet wird, und das von außen steuerbare Gasleitelement des ersten Moduls in den geöffneten Zustand gebracht wird und der Zwischenabschnitt mit dem Isoliergas des ersten Moduls geflutet wird.

Bezüglich der Vorteile des erfindungsgemäßen Verfahrens sei auf die obigen Erläuterungen verwiesen.

Erfindungsgemäß ist das steuerbare Gasleitelement des ersten Moduls ein Ventil mit zumindest drei Anschlüssen, von denen ein erster Anschluss mit dem Innenraum des Gehäuses des ersten Moduls in Verbindung steht, ein zweiter Anschluss - nach dem mechanischen Verbinden der zwei Module - mit dem Zwischenabschnitt in Verbindung steht und ein dritter Anschluss mit einem Außenbereich außerhalb des ersten Moduls in Verbindung steht und eine Gasstromverbindung mit einer externen, außerhalb des Moduls befindlichen Gas- oder Vakuumquelle ermöglicht, wobei das Ventil in einer ersten Ventilstellung zumindest den ersten Anschluss verschließt, in einer zweiten Stellung den ersten und den zweiten Anschluss miteinander gasstrommäßig verbindet und in einer dritten Ventilstellung den dritten Anschluss mit dem ersten Anschluss verbindet, zum Einfüllen des Isoliergases in das erste Modul eine externe Gasquelle an den dritten Anschluss angeschlossen wird, das Ventil in die dritte Ventilstellung gebracht wird und Isoliergas durch den dritten Anschluss und den ersten Anschluss hindurch in den Innenraum des ersten Moduls geleitet wird, nach dem Einfüllen des Isoliergases das Ventil in die erste Ventilstellung gebracht wird und das erste Modul gasdicht verschlossen wird, das erste Modul und das zweite Modul mechanisch miteinander verbunden werden und der Zwischenabschnitt gebildet wird und nach dem Verbinden der Module das Ventil in die zweite Ventilstellung gebracht und das Isoliergas aus dem Innenraum des ersten Moduls in den Zwischenabschnitt geleitet wird.

Bei der letztgenannten Verfahrensvariante wird es darüber hinaus als vorteilhaft angesehen, wenn vor dem Einfüllen des Isoliergases in das erste Modul eine externe Vakuumquelle an den dritten Anschluss angeschlossen wird, das Ventil in die ritte Ventilstellung gebracht wird und der Innenraum des ersten Moduls evakuiert wird.

Die Erfindung wird nachfolgend anhand von Ausführungsbeispielen näher erläutert; dabei zeigen beispielhaft
- Figur 1: ein Ausführungsbeispiel für ein gasisoliertes elektrisches Modul, das zur Bildung einer gasisolierten elektrischen Baugruppe eingesetzt werden kann,
- Figur 2: ein Ausführungsbeispiel für eine erfindungsgemäße gasisolierte elektrische Baugruppe, die aus zwei elektrischen Modulen gemäß Figur 1 zusammengesetzt ist,
- Figur 3: ein weiteres Ausführungsbeispiel für ein erfindungsgemäßes gasisoliertes elektrisches Modul und
- Figur 4: ein Ausführungsbeispiel für eine erfindungsgemäße gasisolierte elektrische Baugruppe, die aus zwei elektrischen Modulen gemäß Figur 3 zusammengesetzt ist.

In den Figuren werden der Übersicht halber für identische oder vergleichbare Komponenten stets dieselben Bezugszeichen verwendet.

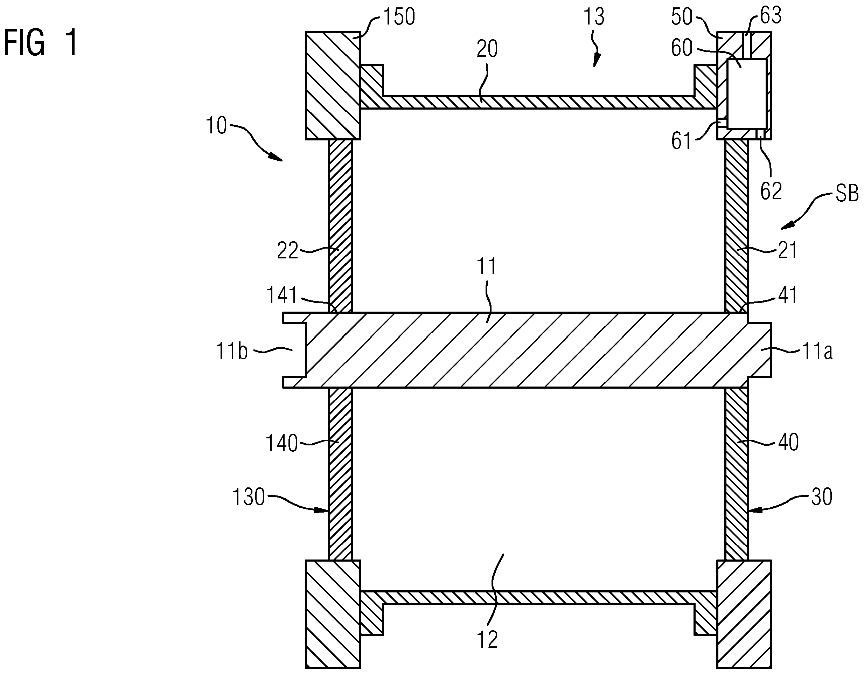

Die Figur 1 zeigt ein gasisoliertes elektrisches Modul 10, das ein rohrförmiges Gehäuse 20 umfasst. Das rohrförmige Gehäuse 20 besteht aus einem elektrisch leitfähigen Material, beispielsweise Metall.

In der Mitte des rohrförmigen Gehäuses 20 befindet sich ein stab- bzw. stangenförmiger elektrischer Innenleiter 11 des elektrischen Moduls 10. Der Innenleiter 11 erstreckt sich entlang der Längsrichtung des rohrförmigen Gehäuses 20 von einem in der Figur 1 rechten, ersten Rohrende 21 des rohrför migen Gehäuses 20 zu einem in der Figur linken zweiten Rohrende 22.

Das erste Rohrende 21 des Gehäuses 20 bildet eine Gehäuseöffnung, die mit einem Verschlusselement 30 verschlossen ist. Das Verschlusselement 30 weist ein elektrisches Isolatorelement 40 auf, das radial außen von einem elektrisch leitfähigen Flanschelement 50 des Verschlusselements 30 gehalten wird. Das Flanschelement 50 verbindet das rohrförmige Gehäuse 20 im Bereich des ersten Rohrendes 21 mit dem Isolatorelement 40.

Das Isolatorelement 40 ist mit einem Durchgangsloch 41 versehen, durch das ein in der Figur 1 rechter Leiterabschnitt bzw. Leiterendabschnitt des Innenleiters 11 hindurchragt; der hindurchragende Leiterabschnitt bildet ein Anschlusselement 11a, das einen elektrischen Anschluss des Innenleiters 11 mit einem Innenleiter eines anderen Moduls auf der rechten Modulseite des Moduls 10 in Figur 1 ermöglicht. Das Anschlusselement 11a des Moduls 10 kann beispielsweise durch einen Steckabschnitt gebildet sein, der in ein komplementäres Anschlusselement, beispielsweise eine Anschlusshülse, eingesteckt werden kann.

Im Flanschelement 50 ist ein Gasleitelement in Form eines Wegeventils 60 integriert. Das Wegeventil 60 weist einen ersten Anschluss 61, einen zweiten Anschluss 62 und einen dritten Anschluss 63 auf. Der erste Anschluss 61 steht mit dem Innenraum 12 des Moduls 10 bzw. mit dem Innenraum des rohrförmigen Gehäuses 20 in Verbindung. Der zweite Anschluss 62 des Wegeventils 60 steht mit einem Schnittstellenbereich SB in Verbindung, der einen Anschluss mit einem anderen, vergleichbaren Modul ermöglicht. Der dritte Anschluss 63 des Wegeventils 60 steht mit dem Außenbereich außerhalb des Moduls 10 in Verbindung und ermöglicht einen Anschluss bzw. eine Gasstromverbindung mit einer externen, außerhalb des Moduls 10 befindlichen Gas- oder Vakuumquelle.

Als besonders vorteilhaft wird es angesehen, wenn das Wegeventil 60 die folgenden vier Ventilstellungen, die nachfolgend als erste, zweite, dritte und vierte Ventilstellung bezeichnet werden, einnehmen kann; die Nummerierung dient hier lediglich zur Unterscheidung der Ventilstellungen und soll keine bestimmte Reihenfolge der Ventilstellungen oder Priorisierung implizieren:
In der ersten Ventilstellung sind die drei Anschlüsse 61, 62 und 63 verschlossen. In der zweiten Ventilstellung sind der erste Anschluss 61 und der zweite Anschluss 62 miteinander verbunden, wobei der dritte Anschluss 63 verschlossen ist. In der dritten Ventilstellung sind der erste Anschluss 61 und der dritte Anschluss 63 miteinander verbunden, wobei der zweite Anschluss 62 verschlossen ist. In der vierten Ventilstellung sind der zweite Anschluss 62 und der dritte Anschluss 63 miteinander verbunden, wobei der erste Anschluss 61 verschlossen ist.

Mit anderen Worten handelt es sich bei dem Wegeventil 60 vorzugsweise um ein 3/4-Wegeventil mit drei Anschlüssen und vier Ventilstellungen; die Funktion der vier Ventilstellungen wird weiter unten noch näher im Detail erläutert.

Das zweite Rohrende 22 des rohrförmigen Gehäuses 20 bildet eine weitere Gehäuseöffnung, die durch ein zweites Verschlusselement 130 gasdicht verschlossen ist. Das zweite Verschlusselement 130 umfasst ein elektrisches Isolatorelement 140, das mittels eines elektrisch leitfähigen Flanschelements 150 des Verschlusselements 130 am rohrförmigen Gehäuse 20 gehalten wird. Das Isolatorelement 140 weist ein Durchgangsloch 141 auf, durch das ein anderer Leiterabschnitt, nämlich der andere Leiterendabschnitt, des stab- oder stangenförmigen Innenleiters 11 hindurchragt. Der hindurchragende Leiterendabschnitt bildet ein Anschlusselement 11b, das einen elektrischen Anschluss eines Anschlusselements eines Innenleiters eines anderen Moduls auf der linken Modulsseite des Moduls 10 in Figur 1 ermöglicht. Das Verschlusselement 130 am zweiten Rohrende 22 entspricht im Wesentlichen dem Verschlusselement 30 am ersten Rohrende 21 mit der Ausnahme, dass im Flanschelement 150 - im Gegensatz zum Flanschelement 50 - kein Gasleitelement oder Wegeventil vorgesehen ist.

Das Modul 10 gemäß Figur 1 bietet die Möglichkeit, mehrere derartige Module 10 zusammenzustecken und dadurch eine gasisolierte elektrische Baugruppe zu bilden, bei der die Innenleiter 11 der Module 10 elektrisch miteinander verbunden sind.

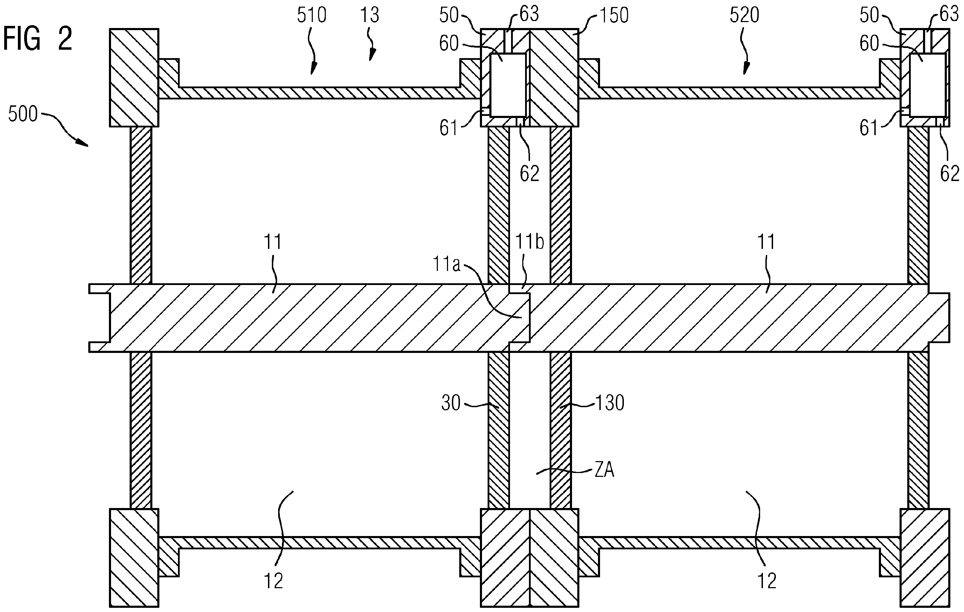

Soll mit dem Modul 10 gemäß Figur 1 eine gasisolierte elektrische Baugruppe gebildet werden, so wird das Modul 10 zur Vorbereitung der Montage vorzugsweise zunächst mit Isoliergas gefüllt. Das Befüllen des Moduls 10 erfolgt vorzugsweise wie folgt:
In einem ersten Schritt wird das Wegeventil 60 in die oben bereits erwähnte dritte Ventilstellung geschaltet, bei der der erste Anschluss 61 mit dem dritten Anschluss 63 verbunden ist und der zweite Anschluss 62 verschlossen ist. In dieser dritten Ventilstellung des Wegeventils 60 steht der Innenraum 12 mit dem Außenraum 13 in einer Gasstromverbindung, so dass mittels einer aus Gründen der Übersicht in der Figur 1 nicht weiter dargestellten Vakuumquelle der Innenraum 12 evakuiert werden kann. Anschließend wird mit einer aus Gründen der Übersicht ebenfalls in der Figur 1 nicht weiter dargestellten Gasquelle ein elektrisch isolierendes Isoliergas in den Innenraum 12 des Gehäuses 20 eingeleitet. Sobald ein ausreichender Gasdruck mit dem Isoliergas erreicht worden ist, wird das Wegeventil 60 von seiner dritten Ventilstellung in seine erste Ventilstellung geschaltet, bei der alle drei Anschlüsse 61, 62 und 63 verschlossen sind. Sobald die erste Ventilstellung des Wegeventils 60 erreicht ist, kann das Modul 10 mit weiteren Modulen verbunden werden, wie nachfolgend im Zusammenhang mit der Figur 2 weiter erläutert wird.

Die Figur 2 zeigt ein Ausführungsbeispiel für eine gasisolierte elektrische Baugruppe 500, die zwei gasisolierte elektrische Module 510 und 520 umfasst. Bei den Modulen 510 und 520 handelt es sich vorzugsweise jeweils um das in der Figur 1 dargestellte Modul 10.

Die beiden Module 510 und 520 werden vor der Montage vorzugsweise jeweils mit Isoliergas gefüllt, wie dies im Zusammenhang mit dem Modul 10 bzw. im Zusammenhang mit der Figur 1 oben erläutert worden ist. Die Wegeventile 60 der beiden Module 510 und 520 befinden sich somit vor Beginn der Montage jeweils in ihrer ersten Ventilstellung, bei der die Anschlüsse 61, 62 und 63 verschlossen sind.

Bei dem Zusammenschieben bzw. Zusammenstecken der beiden Module 510 und 520 wird das Anschlusselement 11a, bei dem es sich beispielsweise um einen Stecker handelt, des Moduls 510 in das Anschlusselement 11b, bei dem es sich vorzugsweise um eine Hülse handelt, des Moduls 520 eingesteckt, wodurch die beiden Innenleiter 11 der beiden Module 510 und 520 elektrisch miteinander verbunden werden. Sobald die beiden Module 510 und 520 aufeinander gesteckt sind, liegt das Flanschelement 50 des Moduls 510 auf dem Flanschelement 150 des Moduls 520 auf, wodurch zwischen den Isolatorelementen 40 der beiden Module 510 und 520 ein Zwischenabschnitt ZA gebildet wird. Der Zwischenabschnitt ZA wird durch die Flanschelemente 50 und 150 vom Außenraum 13 außerhalb der Baugruppe 500 gasstrommäßig getrennt.

Wie bereits erwähnt, sind die Innenräume 12 der beiden Module 510 und 520 jeweils mit Isoliergas gefüllt, so dass eine ausreichende elektrische Isolation zwischen dem Innenleiter 11 und dem jeweiligen rohrförmigen Gehäuse 20 bei beiden Modulen 510 und 520 gewährleistet ist. Lediglich im Bereich des Zwischenabschnitts ZA ist noch kein Isoliergas vorhanden, weil sich nach dem Zusammenstecken der beiden Module 510 und 520 im Zwischenabschnitt ZA noch Umgebungsluft befindet. Um einen sicheren Betrieb der Baugruppe 500 zu gewährleisten, muss auch der Zwischenabschnitt ZA mit Isoliergas gefüllt werden. Ein Befüllen des Zwischenabschnitts ZA mit Isoliergas kann beispielsweise wie folgt erfolgen:

### Verfahrensvariante I:

Im Rahmen einer ersten Verfahrensvariante kann das Wegeventil 60 des Moduls 510 in seine vierte Ventilstellung gebracht werden, bei der der zweite Anschluss 62 und der dritte Anschluss 63 miteinander verbunden und der erste Anschluss 61 verschlossen ist. In der vierten Ventilstellung des Wegeventils 60 kann der Zwischenabschnitt ZA mittels einer in der Figur 2 nicht dargestellten Vakuumquelle zunächst evakuiert werden, um die Umgebungsluft aus dem Zwischenabschnitt ZA zu entfernen. Anschließend kann mit einer Gasquelle durch das Wegeventil 60 von außen Isoliergas in den Zwischenabschnitt ZA eingeführt werden.

### Verfahrensvariante II:

Als besonders vorteilhaft wird es angesehen, wenn das Befüllen des Zwischenabschnitts ZA mittels des im Innenraum 12 des Moduls 510 befindlichen Isoliergases erfolgt und ein Vermischen der im Zwischenabschnitt ZA befindlichen Umgebungsluft und dem Isoliergas im Innenraum 12 des Moduls 510 hingenommen wird. Eine solche Vorgehensweise erspart in vorteilhafter Weise ein Evakuieren des Zwischenabschnitts ZA mit einer Vakuumquelle sowie ein Befüllen des Zwischenabschnitts ZA mit einer separaten Gasquelle. Auf den Einsatz einer Vakuumquelle und einer Gasquelle im Baustellen- bzw. Montagebereich kann somit verzichtet und die Montage vereinfacht und beschleunigt werden.

Mit anderen Worten wird es als vorteilhaft angesehen, wenn der Zwischenabschnitt ZA mit dem im Innenraum 12 des Moduls 510 befindlichen Isoliergases geflutet wird. Um ein solches Fluten des Zwischenabschnitts ZA mit dem Isoliergas zu ermöglichen, wird lediglich das Wegeventil 60 des Moduls 510 in seine zweite Ventilstellung gebracht, bei der der erste Anschluss 61 mit dem zweiten Anschluss 62 verbunden ist und der dritte Anschluss 63 verschlossen bleibt. In dieser zweiten Ventilstellung besteht eine Gasstromverbindung zwischen dem Innenraum 12 des Moduls 510 und dem Zwischenabschnitt ZA, die ein Eindringen von Isoliergas aus dem Innenraum 12 in den Zwischenabschnitt ZA sowie damit einhergehend einen Übergang von Umgebungsluft aus dem Zwischenabschnitt ZA in den Innenraum 12 des Moduls 510 ermöglicht.

Da das Volumen des Innenraums 12 sehr viel größer als das des Zwischenabschnitts ZA ist, wird das Vermischen der Umgebungsluft und des Isoliergases die Isolierfähigkeit des Isoliergases im Innenraum 12 bzw. im Zwischenabschnitt ZA nicht signifikant reduzieren, so dass trotzdem noch eine ausreichende elektrische Isolierfähigkeit des Mischgases im Innenraum 12 und im Zwischenabschnitt ZA gewährleistet bleibt.

Nach dem Umstellen des Wegeventils 60 in die zweite Ventilstellung sind somit die beiden Innenräume 12 der Module 510 und 520 sowie auch der Zwischenabschnitt ZA in ausreichendem Maße mit Isoliergas gefüllt, so dass die beiden Module 510 und 520 elektrisch einsatzfähig sind und mit elektrischer Hochspannung beaufschlagt werden können.

In entsprechender Weise kann die Baugruppe 500 gemäß Figur 2 mit weiteren Modulen, wie beispielsweise dem Modul 10 gemäß Figur 1, verlängert werden, indem die entsprechenden Module 10 gemäß Figur 1 auf der rechten bzw. linken Seite der Baugruppe 500 gemäß Figur 2 aufgesteckt werden.

Sollen die beiden Module 510 und 520 wieder getrennt werden, so wird vorzugsweise zunächst an den Anschluss 63 des Wegeventils 60 eine Absaugvorrichtung angeschlossen. Anschließend wird das Wegeventil 60 von seiner zweiten Ventilstellung in seine vierte Ventilstellung geschaltet, bei der die Anschlüsse 62 und 63 miteinander verbunden und der Anschluss 61 verschlossen ist. In dieser vierten Ventilstellung kann das in dem Zwischenabschnitt ZA befindliche Isoliergas abgesaugt und ein Abfluss des Isoliergases in die Umgebung umweltfreundlich vermieden werden.

Nach dem Absaugen des Isoliergases wird anschließend der Zwischenabschnitt ZA mit Umgebungsluft gefüllt. Danach können die beiden Module 510 und 520 voneinander getrennt werden, indem die Flanschelemente 50 und 150 voneinander getrennt und die beiden Anschlusselemente 11a und 11b auseinander gezogen werden.

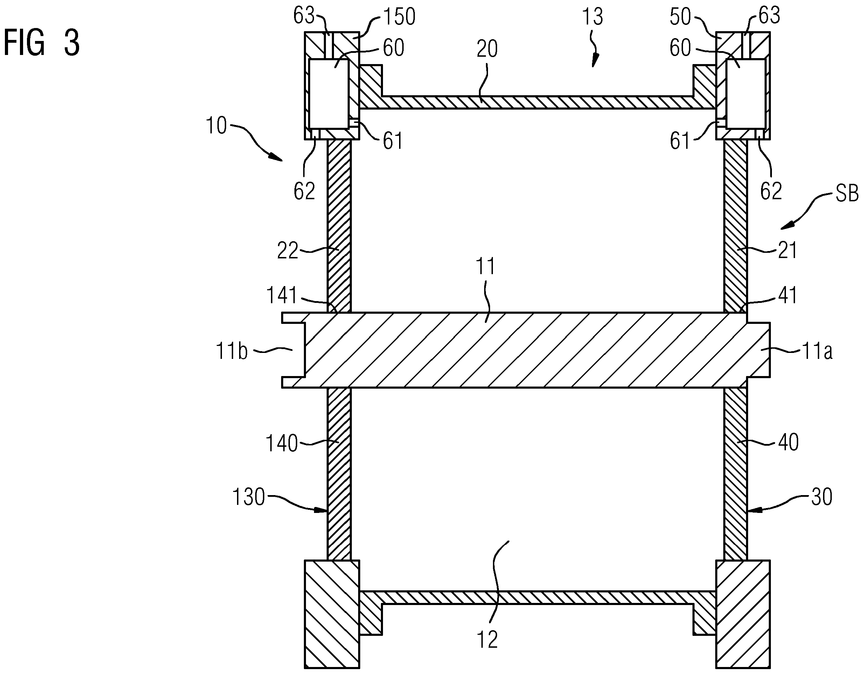

Die Figur 3 zeigt ein weiteres Ausführungsbeispiel für ein gasisoliertes elektrisches Modul 10, das zur Bildung gasisolierter elektrischer Baugruppen, wie beispielsweise der Baugruppe 500 gemäß Figur 2, geeignet ist.

Bei dem Modul 10 gemäß Figur 3 sind beide Flanschelemente 50 und 150 jeweils mit Wegeventilen 60 ausgestattet, so dass der Innenraum 12 des Moduls 10 sowohl am ersten Rohrende 21 als auch am zweiten Rohrende 22 jeweils in eine Gasstromverbindung mit dem außenliegenden Schnittstellenbereich SB gebracht werden kann.

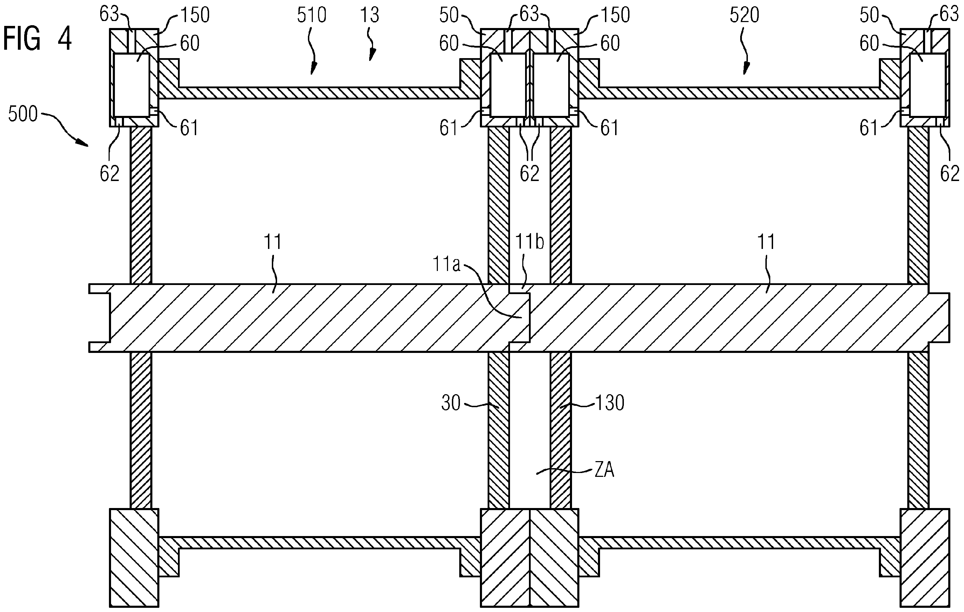

Die Figur 4 zeigt eine Baugruppe 500, die zwei Module 510 und 520 umfasst, die jeweils mit dem Modul 10 gemäß Figur 3 baugleich sind.

Bei der Baugruppe 500 gemäß Figur 4 kann durch das Einstellen der zweiten Ventilstellung der Wegeventile 60 der Module 510 und 520 erreicht werden, dass sowohl der Innenraum 12 des Moduls 510 als auch der Innenraum 12 des Moduls 520 jeweils mit dem Zwischenabschnitt ZA und somit über den Zwischenabschnitt ZA auch miteinander in einer Gasstromverbindung stehen.

Im Übrigen gelten die obigen Erläuterungen im Zusammenhang mit der Baugruppe 500 gemäß Figur 2 entsprechend.

Sollen die beiden Module 510 und 520 der Baugruppe 500 gemäß Figur 4 voneinander getrennt werden, so kann ein Absaugen des Isoliergases aus dem Zwischenabschnitt ZA sowohl über das in der Figur 4 rechte Wegeventil 60 des Moduls 510 als auch über das in der Figur 4 linke Wegeventil 60 des Moduls 520 erfolg en, indem das jeweilige Ventil mit einer Absaugvorrichtung am Anschluss 63 versehen wird und das Ventil anschließend in seine vierte Ventilstellung geschaltet wird, wie dies im Zusammenhang mit der Figur 2 oben bereits im Detail erläutert worden ist.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen, der durch die Ansprüche definiert ist.

## Patentansprüche

1. Gasisolierte elektrische Baugruppe (500) mit zumindest einem ersten Modul (510) und mindestens einem zweiten Modul (520), das mit dem ersten Modul (510) mechanisch verbunden ist, wobei
zumindest das erste Modul (510) ein Modul mit einem Gehäuse (20) und einem zumindest abschnittsweise im Gehäuse (20) befindlichen Innenleiter (11) ist, wobei
- das Modul (10, 510, 520) ein moduleigenes, das Gehäuse (20) an einer Gehäuseöffnung (21) verschließendes Verschlusselement (30) aufweist, das ein Isolatorelement (40) umfasst,
- das Isolatorelement (40) ein Durchgangsloch (41) aufweist, in das der Innenleiter (11) hineinragt oder durch das der Innenleiter (11) nach außen heraus in einen außerhalb des Gehäuses (20) befindlichen und an das Isolatorelement (40) angrenzenden Schnittstellenbereich (SB), der zum Anschluss eines weiteren gasisolierten elektrischen Moduls (10, 510, 520) geeignet ist, hineinragt, und
- das Verschlusselement (30) ein von außen steuerbares Gasleitelement aufweist, das in einem geöffneten Zustand einen Gasfluss zwischen dem Innenraum (12) des Gehäuses (20) und dem Schnittstellenbereich (SB) ermöglicht und in einem geschlossenen Zustand das Verschlusselement (30) gasdicht verschließt,
- das zweite Modul (520) ein moduleigenes Verschlusselement (130) aufweist, das ein Gehäuse (20) des zweiten Moduls (520) an einer Gehäuseöffnung (22) verschließt und ein Isolatorelement (140) umfasst,
- das Isolatorelement (140) des zweiten Moduls (520) ein Durchgangsloch (141) aufweist, in das ein Innenleiter (11) des zweiten Moduls (520) hineinragt oder durch das der Innenleiter (11) in Richtung auf das erste Modul (520) herausragt, und
- die Verschlusselemente der zwei Module einen Zwischenabschnitt (ZA) zwischen sich begrenzen, wobei
- der Zwischenabschnitt (ZA) zwischen dem Verschlusselement (30) des ersten Moduls (510) und dem Verschlusselement (130) des zweiten Moduls (520) im geschlossenen Zustand des von außen steuerbaren Gasleitelements des ersten Moduls (510) vom Innenraum (12) des ersten Moduls (510) gasstrommäßig getrennt ist und
- der Zwischenabschnitt (ZA) im geöffneten Zustand des von außen steuerbaren Gasleitelements des ersten Moduls (510)
- mit dem Innenraum (12) des ersten Moduls (510) gasstrommäßig verbunden ist,
**dadurch gekennzeichnet, dass**
- das steuerbare Gasleitelement zumindest drei Anschlüsse aufweist, von denen ein erster Anschluss (61) mit dem Innenraum (12) des Gehäuses (20) in Verbindung steht, ein zweiter Anschluss (62) mit dem Schnittstellenbereich (SB) und somit mit dem Zwischenabschnitt (ZA) in Verbindung steht und ein dritter Anschluss (63) mit einem Außenbereich außerhalb des Moduls (10, 510, 520) in Verbindung steht und eine Gasstromverbindung mit einer externen, außerhalb des Moduls (10, 510, 520) befindlichen Gas- oder Vakuumquelle ermöglicht, und
- das Gasleitelement ein Wegeventil(60)ist, das in einer ersten Ventilstellung den ersten Anschluss (61) verschließt, in einer zweiten Ventilstellung den ersten und den zweiten Anschluss (62) miteinander gasstrommässig verbindet, in einer dritten Ventilstellung den dritten Anschluss (63) ausschließlich mit dem ersten Anschluss (61) verbindet und in einer vierten Ventilstellung, den ersten Anschluss (61) verschließt und den zweiten und dritten Anschluss (63) miteinander gasstrommässig verbindet.

2. Verfahren zum Montieren einer gasisolierten elektrischen Baugruppe (500) nach Anspruch 1, in dem
- das erste Modul (510) mit einem Isoliergas gefüllt und anschließend gasdicht verschlossen wird, wobei, insbesondere indem, das von außen steuerbare Gasleitelement des ersten Moduls (510) in den geschlossenen Zustand gebracht wird,
- das zweite Modul (520) mit einem Isoliergas gefüllt und anschließend gasdicht verschlossen wird,
- nach dem Einfüllen des Isoliergases in die zwei Module die zwei Module mechanisch miteinander verbunden werden, wobei zwischen den Verschlusselementen der zwei Module ein Zwischenabschnitt (ZA) gebildet wird, und
- das von außen steuerbare Gasleitelement des ersten Moduls (510) in den geöffneten Zustand gebracht wird und der Zwischenabschnitt (ZA) mit dem Isoliergas des ersten Moduls (510) geflutet wird, wobei
- zum Einfüllen des Isoliergases in das erste Modul (510) eine externe Gasquelle an den dritten Anschluss (63) angeschlossen wird, das Ventil in die dritte Ventilstellung gebracht wird und Isoliergas durch den dritten Anschluss (63) und den ersten Anschluss (61) hindurch in den Innenraum (12) des ersten Moduls (510) geleitet wird,
- nach dem Einfüllen des Isoliergases das Ventil in die erste Ventilstellung gebracht wird und das erste Modul (510) gasdicht verschlossen wird, und
- nach dem Verbinden der Module das Ventil in die zweite Ventilstellung gebracht und das Isoliergas aus dem Innenraum (12) des ersten Moduls (510) in den Zwischenabschnitt (ZA) geleitet wird.

3. Verfahren nach Anspruch 2,
**dadurch gekennzeichnet, dass** vor dem Einfüllen des Isoliergases in das erste Modul (510) eine externe Vakuumquelle an den dritten Anschluss (63) angeschlossen wird, das Ventil in die dritte Ventilstellung gebracht wird und der Innenraum (12) des ersten Moduls (510) evakuiert wird.

4. Baugruppe nach Anspruch 1 **dadurch gekennzeichnet, dass** das steuerbare Gasleitelement einen Bestandteil eines Flanschelements (50) bildet, das das Gehäuse (20) und das Isolatorelement (40) miteinander verbindet und eine mechanische Schnittstelle bildet, die zum Anschluss eines Flanschelements (150) des erwähnten weiteren gasisolierten elektrischen Moduls (10, 510, 520) geeignet ist.

5. Baugruppe nach einem der voranstehenden Ansprüche 1 oder 4, **dadurch gekennzeichnet, dass** der Innenleiter (11) in demjenigen Leiterabschnitt, der in das Durchgangsloch (41) im Isolatorelement (40) hineinragt oder durch das Durchgangsloch (41) im Isolatorelement (40) hindurchragt, ein Anschlusselement (11a) aufweist, das eine steckbare elektrische Verbindung mit einem dazu passenden, insbesondere komplementären, Anschlusselement (11b) eines Innenleiters (11) des weiteren gasisolierten elektrischen Moduls (10, 510, 520) ermöglicht.

6. Baugruppe nach Anspruch 5, **dadurch gekennzeichnet, dass** das Anschlusselement durch einen Steckerabschnitt, eine Kontakthülse oder einen Federkontakt gebildet ist oder zumindest einen Steckerabschnitt, eine Kontakthülse und/oder zumindest einen Federkontakt aufweist.

7. Baugruppe nach einem der voranstehenden Ansprüche 1 oder 4 bis 6, **dadurch gekennzeichnet, dass** das Gehäuse (20) ein rohrförmiges Gehäuse (20) ist und ein erstes und ein zweites Rohrende (21, 22) aufweist, von denen das erste Rohrende (21) die oben erwähnte Gehäuseöffnung (21) bildet.

8. Baugruppe nach Anspruch 7, **dadurch gekennzeichnet, dass**
- das zweite Rohrende (22) mit einem zweiten Verschlusselement (130) gasdicht verschlossen ist, das ein zweites Isolatorelement (140) umfasst, und
- das zweite Isolatorelement (140) ein Durchgangsloch (141) aufweist, in das der Innenleiter (11) hineinragt oder durch den der Innenleiter (11) in einen zweiten Schnittstellenbereich (SB) hineinragt, der zum Anschluss eines dritten gasisolierten elektrischen Moduls (10, 510, 520) geeignet ist

## Claims

1. Gas-insulated electrical assembly (500) comprising at least one first module (510) and at least one second module (520) which is mechanically connected to the first module (510), wherein
at least the first module (510) is a module comprising a housing (20) and an internal conductor (11) which is located in the housing (20) at least in sections, wherein
- the module (10, 510, 520) has a module-specific closure element (30) which closes the housing (20) at a housing opening (21) and comprises an insulator element (40),
- the insulator element (40) has a passage hole (41) into which the internal conductor (11) projects or through which the internal conductor (11) projects outwards into an interface region (SB) which is located outside the housing (20) and adjoins the insulator element (40) and is suitable for connection of a further gas-insulated electrical module (10, 510, 520), and
- the closure element (30) has a gas-conducting element which can be controlled from the outside, allows gas flow between the interior (12) of the housing (20) and the interface region (SB) in an open state and closes the closure element (30) in a gas-tight manner in a closed state,
- the second module (520) has a module-specific closure element (130) which closes a housing (20) of the second module (520) at a housing opening (22) and comprises an insulator element (140),
- the insulator element (140) of the second module (520) has a passage hole (141) into which an internal conductor (11) of the second module (520) projects or through which the internal conductor (11) projects out in the direction of the first module (520), and
- the closure elements of the two modules delimit an intermediate section (ZA) between them, wherein
- the intermediate section (ZA) between the closure element (30) of the first module (510) and the closure element (130) of the second module (520) is separated in terms of gas flow from the interior (12) of the first module (510) in the closed state of the gas-conducting element of the first module (510) that can be controlled from the outside, and
- the intermediate section (ZA) is connected in terms of flow to the interior (12) of the first module (510) in the open state of the gas-conducting element of the first module (510) that can be controlled from the outside, **characterized in that**
- the controllable gas-conducting element has at least three connections, a first connection (61) of which is connected to the interior (12) of the housing (20), a second connection (62) of which is connected to the interface region (SB) and therefore to the intermediate section (ZA) and a third connection (63) of which is connected to an external region outside the module (10, 510, 520) and renders possible a gas flow connection to an external gas or vacuum source which is located outside the module (10, 510, 520), and
- the gas-conducting element is a directional valve (60) which closes the first connection (61) in a first valve position, connects the first and the second connection (62) to one another in terms of flow in a second valve position, connects the third connection (63) exclusively to the first connection (61) in a third valve position and closes the first connection (61) and connects the second and the third connection (63) to one another in terms of flow in a fourth valve position.

2. Method for assembling a gas-insulated electrical assembly (500) according to Claim 1, in which
- the first module (510) is filled with an insulating gas and then closed in a gas-tight manner, wherein, in particular by way of the gas-conducting element of the first module (510) that can be controlled from the outside being moved to the closed state,
- the second module (520) is filled with an insulating gas and then closed in a gas-tight manner,
- the two modules are mechanically connected to one another after the insulating gas is introduced into the two modules, wherein an intermediate section (ZA) is formed between the closure elements of the two modules, and
- the gas-conducting element of the first module (510) that can be controlled from the outside is moved to the open state and the intermediate section (ZA) is flooded with the insulating gas of the first module (510), wherein
- an external gas source is connected to the third connection (63), the valve is moved to the third valve position and insulating gas is conducted through the third connection (63) and the first connection (61) into the interior (12) of the first module (510) for the purpose of introducing the insulating gas into the first module (510),
- the valve is moved to the first valve position and the first module (510) is closed in a gas-tight manner after the insulating gas is introduced,
and
- the valve is moved to the second valve position and the insulating gas is conducted out of the interior (12) of the first module (510) into the intermediate section (ZA) after the modules are connected.

3. Method according to Claim 2,
**characterized in that**
an external vacuum source is connected to the third connection (63), the valve is moved to the third valve position and the interior (12) of the first module (510) is evacuated before the insulating gas is introduced into the first module (510).

4. Assembly according to Claim 1,
**characterized in that**
the controllable gas-conducting element forms a constituent part of a flange element (50) which connects the housing (20) and the insulator element (40) to one another and forms a mechanical interface which is suitable for connection of a flange element (150) of the said further gas-insulated electrical module (10, 510, 520).

5. Assembly according to either of the preceding Claims 1 and 4,
**characterized in that**
the internal conductor (11) has a connection element (11a) **in that** conductor section which projects into the passage hole (41) in the insulator element (40) or projects through the passage hole (41) in the insulator element (40), which connection element renders possible a pluggable electrical connection with a matching, in particular complementary, connection element (11b) of an internal conductor (11) of the further gas-insulated electrical module (10, 510, 520).

6. Assembly according to Claim 5,
**characterized in that**
the connection element is formed by a plug section, a contact sleeve or a spring contact or has at least one plug section, one contact sleeve and/or at least one spring contact.

7. Assembly according to one of the preceding Claims 1 and 4 to 6,
**characterized in that**
the housing (20) is a tubular housing (20) and has a first and a second pipe end (21, 22), the first pipe end (21) of which forms the abovementioned housing opening (21).

8. Assembly according to Claim 7,
**characterized in that**
- the second pipe end (22) is connected in a gas-tight manner to a second closure element (130) which comprises a second insulator element (140), and
- the second insulator element (140) has a passage hole (141) into which the internal conductor (11) projects or through which the internal conductor (11) projects into a second interface region (SB) which is suitable for connection of a third gas-insulated electrical module (10, 510, 520).

## Revendications

1. Ensemble (500) électrique à isolation par du gaz, comprenant au moins un premier module (510) et au moins un deuxième module (520), qui est assemblé mécaniquement au premier module (510), dans lequel
au moins le premier module (510) est un module ayant un boîtier (20) et un conducteur (11) intérieur se trouvant, au moins par tronçon, dans le boîtier (20), dans lequel
- le module (10, 510, 520) a un élément (30) de fermeture propre au module, qui ferme le boîtier (20) à une ouverture (21) du boîtier et qui comprend un élément (40) formant isolateur,
- l'élément (40) isolateur a un trou (41) traversant, dans lequel le conducteur (11) intérieur pénètre ou par lequel le conducteur (11) intérieur sort à l'extérieur dans une partie (SB) d'interface se trouvant à l'extérieur du boîtier (20) et voisine de l'élément (40) formant isolateur, partie qui est propre au raccordement d'un autre module (10, 510, 520) électrique à isolation par du gaz, et
- l'élément (30) de fermeture a un élément de conduite du gaz pouvant être commandé de l'extérieur, qui, dans un état ouvert, rend possible un flux de gaz entre l'intérieur (12) du boîtier (20) et la région (SB) d'interface et, dans un état fermé, ferme d'une manière étanche au gaz l'élément (30) de fermeture,
- le deuxième module (520) a un élément (130) de fermeture propre au module, qui ferme un boîtier (20) du deuxième module (520) à une ouverture (22) du boîtier et comprend un élément (140) formant isolateur,
- l'élément (140) isolateur du deuxième module (520) a un trou (141) traversant, dans lequel pénètre un conducteur (11) intérieur du deuxième module (520) ou par lequel le conducteur (11) intérieur sort en direction du premier module (520), et
- les éléments de fermeture des deux modules délimitent entre eux une partie (ZA) intermédiaire, la partie (ZA) intermédiaire entre l'élément (30) de fermeture du premier module (510) et l'élément (130) de fermeture du deuxième module (520) est, à l'état fermé de l'élément de conduite de gaz, pouvant être commandé de l'extérieur, du premier module (510), séparé du point de vue du courant gazeux de l'intérieur (12) du premier module (510) et
- la partie (ZA) intermédiaire est, à l'état ouvert de l'élément de conduite de gaz, pouvant être commandé de l'extérieur du premier module (510), relié du point de vue du courant gazeux à l'intérieur (12) du premier module (510),
**caractérisé en ce que**
- l'élément de conduite de gaz pouvant être commandé a au moins trois raccords, dont un premier raccord (61) est en communication avec l'intérieur (12) du boîtier (20), un deuxième raccord (62) est en communication avec la région (SB) d'interface et ainsi avec la partie (ZA) intermédiaire et un troisième raccord (63) est en communication avec une partie extérieure à l'extérieur du module 10, 510, 520) et rend possible une liaison par courant gazeux avec une source de gaz ou de vide extérieure se trouvant à l'extérieur du module (10, 510, 520), et
- l'élément de conduite de gaz est une vanne (60) à plusieurs voies, qui, dans une première position de la vanne, ferme le premier raccord (61), dans une deuxième position de la vanne, relie de manière à donner un courant de gaz entre eux le premier et le deuxième raccord (62), dans une troisième position de la vanne, relie le troisième raccord (63) exclusivement au premier raccord (61) et dans une quatrième position de la vanne, ferme le premier raccord (61) et relie le deuxième et le troisième raccords (63) entre eux de manière à donner un courant gazeux.

2. Procédé de montage d'un ensemble (500) électrique à isolation par du gaz suivant la revendication 1,
dans lequel
- on remplit le premier module (510) d'un gaz isolant et ensuite on le ferme d'une manière étanche au gaz, dans lequel, notamment par le fait que l'on met l'élément de conduite de gaz, pouvant être commandé de l'extérieur, du premier module (510) à l'état fermé,
- on remplit le deuxième module (520) d'un gaz isolant et ensuite on le ferme de manière étanche au gaz,
- après le remplissage par du gaz isolant du deuxième module, on assemble mécaniquement entre eux les deux modules, dans une partie (ZA) intermédiaire étant formée entre les éléments de fermeture des deux modules, et
- on met l'élément de conduite de gaz, pouvant être commandé de l'extérieur, du premier module (510) dans l'état ouvert et on remplit la partie (ZA) intermédiaire du gaz isolant du premier module (510),
dans lequel
- pour remplir le premier module (510) du gaz isolant, on raccorde une source extérieure de gaz au troisième raccord (63), on met la vanne dans la troisième position de la vanne et on envoie du gaz isolant par le troisième raccord (63) et par le premier raccord (61) à l'intérieur (12) du premier module (510),
- après avoir rempli par du gaz isolant, on met la vanne dans le premier état de la vanne et on ferme d'une manière étanche au gaz le premier module (510),
et
- après l'assemblage des modules, on met la vanne dans le deuxième état de la vanne et on envoie le gaz isolant de l'intérieur (12) du premier module (510) à la partie (ZA) intermédiaire.

3. Procédé suivant la revendication 2,
**caractérisé en ce que**,
avant le remplissage du premier module (510) par du gaz isolant, on raccorde une source extérieure de vide au troisième raccord (63), on met la vanne dans la troisième position de la vanne et on fait le vide à l'intérieur (12) du premier module (510).

4. Ensemble suivant la revendication 1,
**caractérisé en ce que**
l'élément de conduite de gaz, pouvant être commandé, forme une partie d'un élément (50) de bride, qui assemble entre eux le boîtier (20) et l'élément (40) formant isolateur et forme une interface mécanique, qui est propre à raccorder un élément (150) de bride de l'autre module (10, 510, 520) électrique à isolation par du gaz mentionné.

5. Ensemble suivant l'une des revendications 1 ou 4 précédentes,
**caractérisé en ce que**
le conducteur (11) intérieur dans le tronçon de conducteur, qui pénètre dans le trou (41) traversant de l'élément (40) formant isolateur ou qui passe dans le trou (41) traversant de l'élément (40) isolateur, a un élément (11a) de raccordement, qui rend possible une liaison électrique enfichable avec un élément (11b) de raccordement, adapté à cela, notamment complémentaire, d'un conducteur (11) intérieur de l'autre module (10, 510, 520) électrique à isolation par du gaz.

6. Ensemble suivant la revendication 5,
**caractérisé en ce que**
l'élément de raccordement est formé d'une partie de connecteur, d'une douille de contact ou d'un contact à ressort ou a au moins une partie de connecteur, une douille de contact et/ou au moins un contact à ressort.

7. Ensemble suivant l'une des revendications 1 ou 4 à 6 précédentes,
**caractérisé en ce que**
le boîtier (20) est un boîtier (20) tubulaire et a une première et une deuxième extrémité (21, 22) de tube, dont la première extrémité (21) forme l'ouverture (21) du boîtier mentionnée ci-dessus.

8. Ensemble suivant la revendication 7,
**caractérisé en ce que**
- la deuxième extrémité (22) du tube est fermée d'une manière étanche au gaz par un deuxième élément (130) de fermeture, qui comprend un deuxième élément (140) formant isolateur, et
- le deuxième élément (140) formant isolateur a un trou (141) traversant, dans lequel pénètre le conducteur (11) intérieur ou par lequel le conducteur (11) intérieure pénètre dans une deuxième région (SB) d'interface, qui est propre au raccordement d'un troisième module (10, 510, 520) électrique à isolation par du gaz.
